# EUROPÄISCHE PATENTSCHRIFT

(11) **EP 0 668 461 B1**
(45) Veröffentlichungstag und Bekanntmachung des Hinweises auf die Patenterteilung: **09.12.1998**
(21) Anmeldenummer: 94116003.8
(22) Anmeldetag: 11.10.1994
(51) Int. Cl.: F16J 15/56, B25D 17/08

(54) **Dichtungsanordnung**
Sealing device
Dispositif d'étanchéité

(30) Priorität: 04.02.1994 DE 4403449
(43) Veröffentlichungstag der Anmeldung: 23.08.1995
(73) Patentinhaber: Firma Carl Freudenberg, 69469 Weinheim (DE)
(72) Erfinder: Barillas, Reina Gonzalo, D-35260 Stadtallendorf (DE); Freitag, Edgar, Dr.rer.nat., D-34613 Schwalmstadt (DE)

(56) Entgegenhaltungen:
- EP-A- 0 014 357
- DE-A- 3 713 208
- FR-A- 2 303 646
- FR-A- 2 306 377
- GB-A- 1 269 055

## Beschreibung

Die Erfindung betrifft eine Dichtungsanordnung für einen hin- und herbewegbaren Kolben gemäß dem Oberbegriff des Anspruchs 1.

Derartige Dichtungsanordnungen sind allgemein bekannt, wie z.B. in FR-A-2 306 377, und gelangen beispielsweise in Maschinen zur Anwendung, die mit hin- und herbewegbaren Kolben zum Antrieb eines Werkzeugs versehen sind. Solche Maschine können durch Preßlufthämmer, Bohrhämmer oder Stichsägen gebildet sein. Dabei ist allerdings zu beachten, daß der zweite Dichtteil unter allen Betriebsbedingungen der Maschine dynamisch abdichtend ausgeführt ist und die Relativbewegung zum abzudichtenden Kolben einen vergleichsweise hohen abrassiven Verschleiß und einen vorzeitigen Ausfall der Dichtung bedingt.

Der Erfindung liegt die Aufgabe zugrunde, eine Dichtungsanordnung der vorbekannten Art derart weiterzuentwickeln, daß eine wesentlich verlängerte Gebrauchsdauer erzielbar sind.

Diese Aufgabe wird erfindungsgemäß mit den kennzeichnenden Merkmalen von Anspruch 1 gelöst. Auf vorteilhafte Ausgestaltungen nehmen die Unteransprüche Bezug.

Der erste und der zweite Dichtteil der Dichtungsanordnung sind durch einen sich im wesentlichen in radialer Richtung erstreckenden, kreisringförmig gestalteten und rollbalgartig dünn ausgebildeten Verbindungssteg miteinander verbunden, und die Differenz zwischen der axialen Breite der Nut und der axialen Ausdehnung des zweiten Dichtteils im Bereich ihrer radialen Überdeckung ist zumindest so groß, wie die während der bestimmungsgemäßen Verwendung auftretende Auslenkbewegung des Kolbens. Wird eine derartige Dichtungsanordnung beispielsweise in Bohrhämmern eingesetzt, ist unter den auftretenden Auslenkbewegungen des Kolbens während der bestimmungsgemäßen Verwendung der Hub des Kolbens zu verstehen, der sich nach dem Anlaufvorgang einstellt und anschließend während des Betriebs erhalten bleibt. Die Dichtungsanordnung hat den Vorteil, daß während dieses Betriebszustandes keine Relativbewegung zwischen der Oberfläche des abzudichtenden Kolbens und dem zweiten Dichtteil stattfindet. Durch die Ausgestaltung des zweiten Dichtteils und die darauf abgestimmte axiale Breite der Nut ist sichergestellt, daß der zweite Dichtteil den Kolbenstatisch abdichtend umschließt, wobei der rollbalgartig ausgebildete Verbindungssteg der gemeinsamen hin- und hergehenden Bewegung von Kolben und zweitem Dichtteil zu folgen vermag.

Gemäß der Erfindung ist der zweite Dichtteil mit Anschlagflächen versehen sein, die eine Oberflächenprofilierung aufweisen. Durch die Oberflächenprofilierung legen sich die Anschlagflächen erst allmählich an die axialen Begrenzungsfläche der Nut an, wobei durch eine derartige Endlagendämpfung Anschlaggeräusche weitgehend vermieden werden. Außerdem wird ein Lösen der Anschlagflächen von den jeweiligen Begrenzungsflächen der Nut dadurch vereinfacht, daß Adhäsion zwischen den Teilen durch die Oberflächenprofilierung zuverlässig ausgeschlossen wird. Die Gebrauchseigenschaften der Dichtungsanordnung sind dadurch verbessert.

Der zweite Dichtteil weist in axialer Richtung beiderseits Stirnflächen auf, die die Anschlagflächen bilden, wobei nur bei Extremauslenkungen des Kolbens die Anschlagflächen an die axialen Begrenzungsflächen der Nut anlegbar sind und nur dann der zweite Dichtteil den Kolben relativ verschiebbar dichtend umschließt. Unter Extremauslenkungen des Kolbens werden beispielsweise bei Verwendung einer Dichtungsanordnung in einen Bohrhammer vergleichsweise niederfrequente Schwingungen mit großen Amplituden bezeichnet, die sich während des Einschwingvorgangs unmittelbar im Anschluß an das Einschalten der Maschine ergeben. Derartige Extremauslenkungen des Kolbens entstehen ebenfalls nach dem Abschalten der Maschine, bis der Kolbens zum Stillstand gekommen sind. Bei Auftreten derartigen Extremauslenkbewegungen, die beispielsweise bei Bohrhämmern eine um Faktor 10 größere Amplitude aufweisen als die Schwingungen während der bestimmungsgemäßen Verwendung, legen sich die Anschlagflächen der Stirnseiten abwechselnd an die jeweils angrenzende Begrenzungsfläche der Nut, wobei der zweite Dichtteil die Oberfläche des Kolbens dynamisch abdichtet. Der Verbindungssteg ist derart bemessen, daß bei Bewegungen des zweiten Dichtteils in axialer Richtung innerhalb der Nut keine gebrauchsdauerverringernden Zugspannungen auftreten. Ein weiterer Vorteil dieser Ausgestaltung besteht in den kompakten Abmessungen der Dichtungsanordnung in axialer Richtung. Da die Schwingungen des Kolbens während der bestimmungsgemäßen Verwendung nur eine vergleichsweise geringe Amplitude aufweisen, können die axialen Abmessungen der Dichtungsanordnung entsprechend klein ausgeführt werden. Dadurch, daß eine dynamische Abdichtung nur während des vergleichsweise kurzen Einschwingvorgangs des Kolbens und dem Ausschwingen nach dem Abschalten der Maschine erfolgt, dichtet der zweite Dichtteil den Kolben nahezu verschleißfrei ab, wodurch außerordentlich lange Standzeiten und unverändert gute Gebrauchseigenschaften der Dichtung während der gesamten Gebrauchsdauer erzielbar sind.

Gemäß einer vorteilhaften Ausgestaltung ist es vorgesehen, daß die Differenz zwischen der axialen Breite der Nut und der axialen Ausdehnung des zweiten Dichtteils 0,05 bis 0,3 mal größer ist, als die Auslenkbewegung des Kolbens. Hierbei ist vorn Vorteil, daß während des bestimmungsgemäßen Betriebs des Kolbens die axial beiderseits angeordneten Stirnflächen des Dichtteils mit den anschließenden Begrenzungsflächen der Nut nicht in Berührung bringbar sind und daher selbst kleinste axiale Relativverlagerungen des zweiten Dichtteils auf dem Kolben in diesem Betriebszustand ausgeschlossen sind. Zur Erzielung eines guten Kompromisses zwischen vergleichsweise großzügigen Toleranzen zur kostengünstigen Herstellung der Dichtungsanordnung und möglichst geringe axiale Abmessungen kann die Differenz zwischen der Breite der Nut und der Ausdehnung des zweiten Dichtteils bevorzugt 0,1 bis 0,25 mal größer sein, als die Auslenkbewegung des Kolbens in gleicher Richtung.

Der erste und der zweite Dichtteil gehen bevorzugt ohne sprunghafte Richtungsänderungen in den jeweils angrenzenden Verbindungssteg einstückig ineinander über. Gebrauchsdauerverringernde Kerbwirkungen im Übergangsbereich des Verbindungsstegs zu den radial beiderseits angrenzenden Dichtteilen können dadurch vermieden werden. Der Verbindungssteg kann daher einer sehr hohen Anzahl von Lastwechseln ermüdungsfrei standhalten, ohne Beschädigungen aufzuweisen.

Der erste und der zweite Dichteil sowie der Verbindungssteg können materialeinheitlich ausgebildet sein. Hierbei ist von Vorteil, daß die Herstellung der Dichtung und somit die Herstellung der Dichtungsanordnung besonders einfach und in fertigungstechnischer und wirtschaftlicher Hinsicht günstig herstellbar ist. Nach einer anderen Ausgestaltung kann die Dichtung im Übergangsbereich zwischen den Dichtteilen und dem Verbindungssteg durch eine Armierung verstärkt sein.

Der erste Dichtteil und der Nutgrund sind zur Sicherstellung einer unverrückbaren und dichten Festlegung der beiden Teile durch einen Preßsitz miteinander verbunden. Durch eine derartige Ausgestaltung wird der gesamte Nutgrund statisch abgedichtet.

Der zweite Dichtteil kann auf der dem Kolben zugewandten Seite innenumfangsseitig mit zumindest zwei Dichtlippen versehen sein, die einander mit axialem Abstand benachbart zugeordnet sind. Die Dichtlippen können beispielsweise gerundet ausgebildet oder durcheinander durchschneidende Kegelflächen begrenzt sein. Durch die Tandemanordnung kann eine der Dichtlippen als Vorschaltdichtung zum Schutz der axial anschließenden Dichtlippe zur Anwendung gelangen. Durch die labyrinthähnliche Anordnung ist ein ausgezeichneter Schutz des abzudichtenden Raums vor Verunreinigung gewährleistet. Ist die Beaufschlagung der Dichtungsanordnung mit Verunreinigungen demgegenüber vergleichsweise geringer, ist es ausreichend, wenn der zweite Dichtteil lediglich eine Dichtlippe aufweist.

Die beschriebene Dichtungsanordnung findet bevorzugt in Bohrhämmern Verwendung. Die hin- und hergehende Bewegung des Kolbens in einem Bohrhammer weist im wesentlichen drei voneinander abweichende Bewegungsabläufe auf. Unmittelbar nach dem Einschalten des Bohrhammers bewegt sich der Kolben mit vergleichsweise geringen Frequenzen und großen Amplituden, beispielsweise im Bereich von 50 bis 80 mm, bis ein eingeschwungener Betriebszustand erreicht ist. Während der bestimmungsgemäßen Verwendung des Bohrhammers weist die Schwingungsamplitude demgegenüber lediglich einen Ausschlag von ungefähr 0,5 mm bei vergleichsweise größerer Frequenz auf. Nach dem Abschalten des Bohrhammers werden die Frequenz des hinund hergehenden Kolbens allmählich niedriger und die Schwingungsamplituden, ähnlich wie beim Einschwingvorgang allmählich wieder größer, bis zum Stillstand des Kolbens. Bei der beschriebenen Dichtungsanordnung ist von Vorteil, daß lediglich während des Einschwingvorgangs und während des Ausschwingvorgangs der zweite Dichtteil den Kolben relativ verschiebbar dynamisch abdichtet. Nur während dieser vergleichsweise kurzen Dauer kann ein vergleichsweise geringer abrassiver Verschleiß auftreten. Im eingeschwungenen Zustand des Kolbens findet demgegenüber keine Relativverlagerung vom zweiten Dichtteil zum Kolben statt sondern lediglich eine statische Abdichtung, die völlig verschleißfrei ist.

Die erfindungsgemäße Dichtungsanordnung ist zur Abdichtung von in wesentlichen kolbenförmigen, hin- und herbewegbaren Maschinenteilen vorgesehen, wobei ebenfalls Plungerkolben und Stangen umfaßt sind.

Die erfindungsgemäße Dichtungsanordnung wird nachfolgend anhand der Fig. 1 bis 3 näher beschrieben.

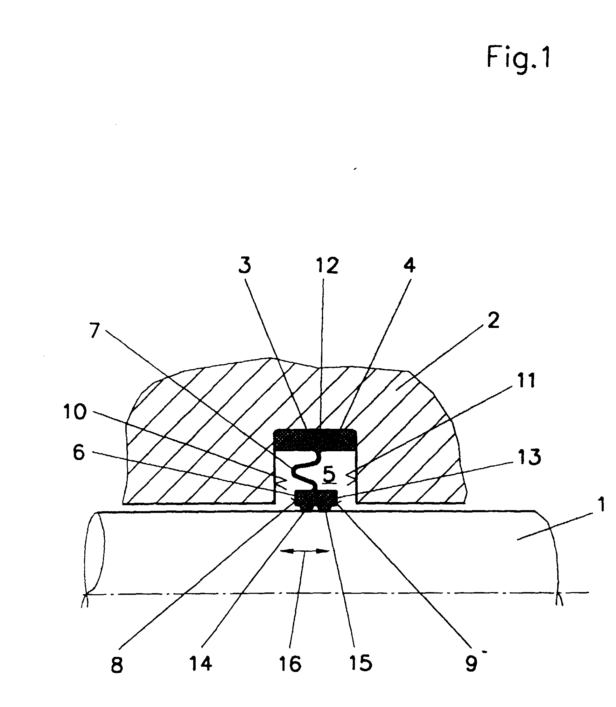

Es zeigen in schematischer Darstellung: Fig. 1 einen Ausschnitt aus einem Ausführungsbeispiel der Dichtungsanordnung, wobei sich der Kolben im eingeschwungenen Zustand hin- und herbewegt.
Fig. 2 die Dichtungsanordnung aus Fig. 1, wobei sich der Kolben mit niedrigerer Frequenz und größerer Schwingungsamplitude hin- und herbewegt, beispielsweise unmittelbar nach dem Einschalten eines Bohrhammers oder nach dem Ausschalten des Bohrhammers bis zum Stillstand des Kolbens.

Fig. 3 die Dichtung aus Fig. 1 und 2 in einer Ansicht von links.

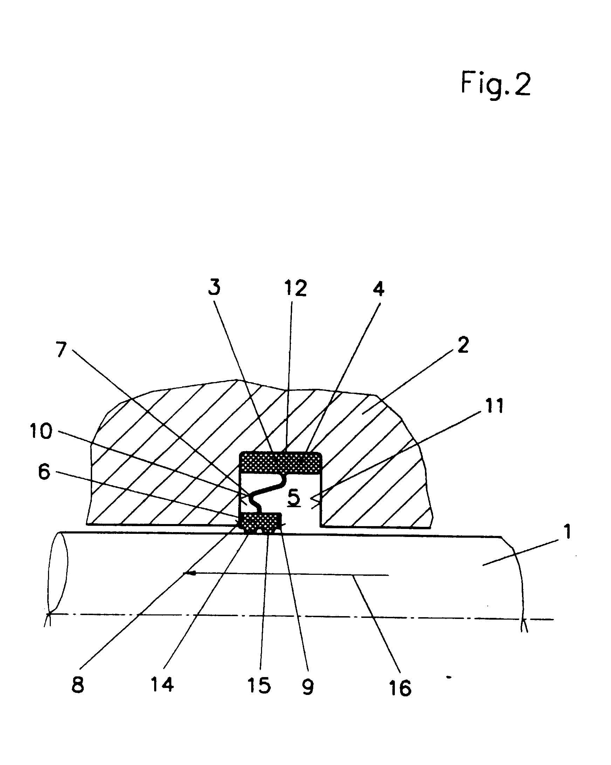

In den Fig. 1 und 2 ist ein Ausschnitt aus einem Ausführungsbeispiel einer Dichtungsanordnung gezeigt, die in einem Bohrhammer zur Anwendung gelangt. Der hin- und herbewegbare Kolben 1 zum Antrieb des Werkzeugs ist von einem Gehäuse 2 mit radialem Abstand umschlossen, wobei das Gehäuse 2 der Oberfläche des Kolbens 1 in radialer Richtung bis auf einen geringen Spalt angenähert ist. Innerhalb des Gehäuses 2 ist eine umfangsseitig umlaufende, in Richtung des Kolbens 1 offene Nut 5 vorgesehen, in der die Dichtung 3 aus polymerem Werkstoff aufgenommen ist. Die Dichtung 3 weist zwei Dichtteile 4, 6 auf, wobei der erste Dichtteil 4 statisch abdichtend ausgeführt und relativ unbeweglich durch einen Preßsitz innerhalb des Nutgrunds 12 der Nut 5 angeordnet ist. Der zweite Dichtteil 6 der ebenfalls im Bereich seiner Anschlagflächen 8, 9 innerhalb der Nut 5 angeordnet ist, ist durch einen rollbalgartig ausgebildeten Verbindungssteg 7 mit dem ersten Dichtteil 4 verbunden und dichtet den Kolben 1 unter radialer Vorspannung ab.

Die Geometrie der Nut 5 und des zweiten Dichtteils 6 sind von ausschlaggebender Bedeutung. Zur Erzielung der vorteilhaften Gebrauchseigenschaften der Dichtungsanordnung ist es erforderlich, daß die Differenz zwischen der axialen Breite der Nut 5 und der axialen Ausdehung des zweiten Dichtteils 6 im Bereich ihrer radialen Überdeckung zumindest so groß ist, wie die in Fig. 1 während der bestimmungsgemäßen Verwendung gezeigte Auslenkbewegung des Kolbens 1. In dem hier gezeigten Ausführungsbeispiel ist die Differenz etwas größer als die Auslenkbewegung des Kolbens 1 um sicherzustellen, daß der zweite Dichtteil 6 mit seinen Anschlagflächen 8, 9 mit den axialen Begrenzungsflächen 10, 11 der Nut 5 nicht in Berührung gelangt. Dadurch ist sichergestellt, daß der zweite Dichtteil den Kolben unter Vermeidung einer Relativbewegung statisch umschließt. Die Dichtung 3, bestehend aus dem ersten und dem zweiten Dichtteil 4, 6 sowie dem zwischen den beiden Dichtteilen 4, 6 angeordneten Verbindungssteg 7 ist einstückig ineinander übergehend und materialeinheitlich ausgebildet.

In Fig. 2 ist zu erkennen, daß sich die Dichtung 3 mit ihrer Anschlagfläche 8 an die entsprechende axiale Begrenzungsfläche 10 der Nut 5 angelegt hat, da sich der abzudichtende Kolben beispielsweise während der Start- oder Abschaltphase des Bohrhammers mit relativ größerer Amplitude und vergleichsweise geringerer Frequenz hin- und herbewegt. Die Pfeile 16 geben die Bewegungsrichtung des Kolbens 1 an, wobei deren unterschiedliche Größe die Größe der Schwingungsamplitude symbolisiert. Im Falle von Fig. 2 findet eine dynamische Abdichtung der Oberfläche des Kolbens 1 statt. Die zwei Dichtlippen 14, 15 berühren die Oberfläche des Kolbens relativ verschiebbar.

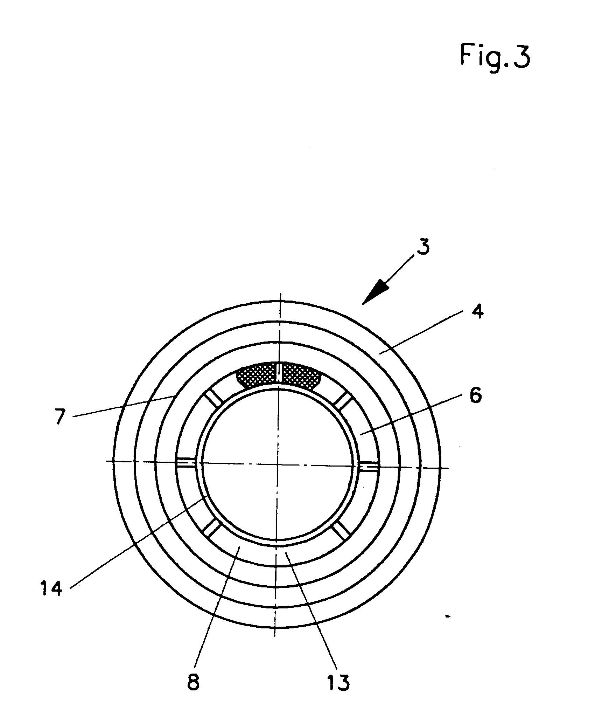

In Fig. 3 ist die Dichtung 3 aus den Fig. 1 und 2 als Einzelteil in einer Seitenansicht gezeigt. Es ist zu erkennen, daß das zweite Dichtteil 6 im Bereich seiner Anschlagfläche 8 mit einer Oberflächenprofilierung 13 versehen ist.

## Patentansprüche

1. Dichtungsanordnung für einen hin- und herbewegbaren Kolben (1), der von einem Gehäuse (2) umfangsseitig umschlossen ist, umfassend eine Dichtung (3) aus polymerem Werkstoff mit einem statisch abdichtenden ersten Dichtteil (4), der in einer in Richtung des Kolbens offenen Nut (5) des Gehäuses (2) festgelegt ist und einen zweiten Dichtteil (6), der - in radialer Richtung betrachtet - zumindest teilweise innerhalb der Nut (5) angeordnet ist und den Kolben (1) unter radialer Vorspannung dichtend umschließt, wobei der erste (4) und der zweite Dichtteil (6) durch einen sich im wesentlichen in radialer Richtung erstreckenden, kreisringförmig gestalteten und rollbalgartig dünn ausgebildeten Verbindungssteg (7) miteinander verbunden sind und wobei die Differenz zwischen der axialen Breite der Nut (5) und der axialen Ausdehnung des zweiten Dichtteils (6) im Bereich ihrer radialen Überdeckung zumindest so groß ist, wie die während der bestimmungsgemäßen Verwendung auftretende Auslenkbewegung des Kolbens (1) und wobei der zweite Dichtteil in axialer Richtung beiderseits mit Anschlagflächen (8,9) versehen ist, **dadurch gekennzeichnet, daß** die Anschlagflächen (8, 9) des zweiten Dichtteils (6) eine Oberflächenprofilierung (13) aufweisen.

2. Dichtungsanordnung nach Anspruch 1, dadurch gekennzeichnet, daß der zweite Dichtteil (6) in axialer Richtung beiderseits Stirnflächen aufweist, die die Anschlagflächen (8, 9) bilden und daß nur bei Extremauslenkungen des Kolbens (1) die Anschlagflächen (8, 9) an die axialen Begrenzungsflächen (10, 11) der Nut (5) anlegbar sind und nur dann der zweite Dichtteil (6) den Kolben (1) relativ verschiebbar dichtend umschließt.

3. Dichtungsanordnung nach Anspruch 1 bis 2, dadurch gekennzeichnet,daß die Differenz zwischen der axialen Breite der Nut (5) und der axialen Ausdehung des zweiten Dichtteils (6) 0,05 bis 0,3 mal größer ist, als die Auslenkbewegung des Kolbens (1).

4. Dichtungsanordnung nach Anspruch 1 bis 3, dadurch gekennzeichnet,daß der erste und der zweite Dichtteil (4, 6) ohne sprunghafte Richtungsänderung in den jeweils angrenzenden Verbindungssteg (7) einstückig ineinander übergehen.

5. Dichtungsanordnung nach Anspruch 1 bis 4, dadurch gekennzeichnet,daß der erste und der zweite Dichtteil (4, 6) sowie der Verbindungssteg (7) materialeinheitlich ausgebildet sind.

6. Dichtungsanordnung nach Anspruch 1 bis 5, dadurch gekennzeichnet,daß der erste Dichtteil (4) und der Nutgrund (12) der Nut (5) durch einen Preßsitz miteinander verbunden sind.

7. Dichtungsanordnung nach Anspruch 1 bis 6, dadurch gekennzeichnet,daß der zweite Dichtteil (6) innenumfangsseitig auf der dem Kolben (1)zugewandten Seite mit zumindest zwei Dichtlippen (14, 15) versehen ist, die einander mit axialem Abstand benachbart zugeordnet sind.

8. Verwendung einer Dichtungsanordnung nach Anspruch 1 bis 7 zum Abdichten des Kolbens in einem Bohrhammer.

## Claims

1. A sealing arrangement for a reciprocating piston (1) which is enclosed circumferentially by a housing (2), comprising a seal (3) of polymer material with a statistically sealing first sealing part (4), which is fixed in a groove (5) in the housing (2), the said groove being open in the direction of the piston, and a second sealing part (6) which - viewed in the radial direction - is arranged at least partially inside the groove (5) and surrounds the piston (1) in a sealing manner with radial prestress, the first (4) and the second sealing part (6) being connected to one another by means of a connecting web (7) which extends essentially in the radial direction, is of circular design and is configured to be thin in the manner of a rolling bellows, and the difference between the axial width of the groove (5) and the axial extent of the second sealing part (6) in the region of their radial overlap being at least as great as the deflection movement of the piston (1) occurring during the intended use, and the second sealing part being provided with stop faces (8, 9) on both sides in the axial direction, characterised in that the stop faces (8, 9) of the second sealing part (6) have a surface profile (13).

2. A sealing arrangement according to claim 1, characterised in that the second sealing part (6) has end faces on both sides in the axial direction, which form the stop faces (8, 9), and in that the stop faces (8, 9) can only be placed against the axial boundary surfaces (10, 11) of the groove (5) under extreme deflections of the piston (1) and only in that case does the second sealing part (6) surround the piston (1) in a sealing manner and so as to be relatively displaceable.

3. A sealing arrangement according to either of claims 1 and 2, characterised in that the difference between the axial width of the groove (5) and the axial extent of the second sealing part (6) is 0.05 to 0.3 times greater than the deflection movement of the piston (1).

4. A sealing arrangement according to any of claims 1 to 3, characterised in that the first and second sealing parts (4, 6) merge integrally without any abrupt change in direction into the respectively adjacent connecting web (7).

5. A sealing arrangement according to any of claims 1 to 4, characterised in that the first and second sealing parts (4, 6) and the connecting web (7) are made of the same material.

6. A sealing arrangement according to any of claims 1 to 5, characterised in that the first sealing part (4) and the base (12) of the groove (5) are connected to one another by means of a press fit.

7. A sealing arrangement according to any of claims 1 to 6, characterised in that the second sealing part (6) is provided with at least two sealing lips (14, 15), arranged adjacent to one another with axial spacing, on the side facing the piston (1) on the inside circumference.

8. The use of a sealing arrangement according to any of claims 1 to 7 for sealing the piston in a hammer drill.

## Revendications

1. Dispositif d'étanchéité pour un piston (1) pouvant effectuer un mouvement de va-et-vient et entouré par un logement (2) sur le côté de sa circonférence, comprenant une garniture d'étanchéité (3) en matière polymère avec un premier élément d'étanchéité (4) étanchéifiant de manière statique qui est fixé dans une gorge (5) du logement (2) ouverte en direction du piston et un second élément d'étanchéité (6) qui - considéré dans la direction radiale - est situé au moins partiellement à l'intérieur de la gorge (5) et entoure le piston (1) de manière étanche sous l'effet d'une précontrainte radiale, le premier (4) et le second (6) éléments d'étanchéité étant reliés l'un à l'autre par un élément intermédiaire de liaison (7) ayant la forme d'une couronne, exécuté de manière semblable à un soufflet mobile mince et s'étendant essentiellement dans la direction radiale, et la différence entre la largeur axiale de la gorge (5) et l'étendue axiale du second élément d'étanchéité (6) dans la région de son recouvrement radial étant au moins aussi importante que la course du piston (1) se produisant pendant l'utilisation conforme aux prescriptions, et le second élément d'étanchéité étant pourvu, sur les deux côtés, dans la direction axiale, de surfaces de butée (8, 9), caractérisé en ce que les surfaces de butée (8, 9) du second élément d'étanchéité (6) sont pourvues d'un profilage superficiel (13).

2. Dispositif d'étanchéité selon la revendication 1, caractérisé en ce que le second élément d'étanchéité (6) est pourvu, sur les deux côtés, dans la direction axiale, de surfaces frontales qui forment les surfaces de butée (8, 9), et en ce que les surfaces de butée (8, 9) ne peuvent être amenées contre les surfaces de limitation axiale (10,11) de la gorge (5) que dans le cas des positions extrêmes de la course du piston (1) et que c'est dans ce cas seulement que le second élément d'étanchéité (6) entoure le piston (1) de manière étanche et de manière à pouvoir effectuer un déplacement relatif.

3. Dispositif d'étanchéité selon l'une des revendications 1 à 2, caractérisé en ce que la différence entre la largeur axiale de la gorge (5) et l'étendue axiale du second élément d'étanchéité (6) est de 0,05 à 0,3 fois plus grande que la course du piston (1).

4. Dispositif d'étanchéité selon l'une des revendications 1 à 3, caractérisé en ce que les premier et second éléments d'étanchéité (4, 6) se confondent dans l'élément intermédiaire de liaison (7) contigu à chacun d'eux sans changement brusque de direction.

5. Dispositif d'étanchéité selon l'une des revendications 1 à 4, caractérisé en ce que les premier et second éléments d'étanchéité (4, 6) ainsi que l'élément intermédiaire de liaison (7) sont formés d'un même matériau.

6. Dispositif d'étanchéité selon l'une des revendications 1 à 5, caractérisé en ce que le premier élément d'étanchéité (4) et le fond (12) de la gorge (5) sont reliés l'un à l'autre par un ajustage serré.

7. Dispositif d'étanchéité selon l'une des revendications 1 à 6, caractérisé en ce que le second élément d'étanchéité (6) est pourvu, sur le côté de sa circonférence interne tourné vers le piston (1), d'au moins deux lèvres d'étanchéité (14, 15) qui sont conjuguées voisines l'une de l'autre avec une distance axiale.

8. Utilisation d'un dispositif d'étanchéité selon l'une des revendications 1 à 7 pour l'étanchéification du piston dans un marteau perforateur.
